# EUROPEAN PATENT SPECIFICATION

(11) **EP 2 279 820 B1**
(45) Date of publication and mention of the grant of the patent: **21.03.2012**
(21) Application number: 10425239.0
(22) Date of filing: 16.07.2010
(51) Int. Cl.: B23D 47/04

(54) **Blocking device, particularly for panels**
Sperrvorrichtung, insbesondere für Platten
Dispositif de blocage, en particulier pour des panneaux

(30) Priority: 30.07.2009 IT RM20090404
(43) Date of publication of application: 02.02.2011
(73) Proprietor: SCM Group S.p.A., 47900 Rimini (RN) (IT)
(72) Inventor: Gabrielli, Arcadio, 47900 Rimini (RN) (IT)
(74) Representative: Iannone, Carlo Luigi

(56) References cited:
- DE-A1- 19 502 659
- DE-U1-202007 002 932

## Description

The present invention relates to a blocking device, particularly for panels.

More specifically, the invention concerns a device of the above kind, particularly studied and realised for cutting machines, but that can be used for any kind of machine requiring grasping one or more elements for moving the same.

In the following the specification will be addressed to a device of the above kind coupled with a pushing member of a cutting machine, but it is well evident that the same must not be unduly considered limitative and the device according to the invention is not limited to the above use.

As it is well known, different kind of machines exist in the wood working field for making panel cutting or milling operations. Particularly, cutting machines are used to cut one or more panels according to the specific needing.

Cutting machines are provided with a lifting bamco, on which different sheets of material to be cut are placed; a pushing element takes, by pliers, one or more sheests from said bench, making them sliding toward the cutting bench, where a blade carriage carries out the cut.

Being it necessary moving a variable amount of panels, pliers employed in said machines must be able to modulate grasping force proportionally to the opening angle of plierswhen one or more sheets are taken. Obviously, more higher is the stack,more higher is its weight, and thus force that must be applied by blocking pliers for moving said stack.

A technical solution is known in this field, described in the Italian Patent Application n° TO95A000143, providing a blocking device comprising a pair of blocking arms, cooperating as pliers, each one provided with a jaw on its free end, at least a cylinder-piston unit, pivoted on upper arm, a lever pivoted on free end of cylinder-piston unit and on lower end, a double lever, pivoted on free ends of the two arms and on said first lever on intermediate pin of the double lever.

A further technical solution is described by utility model DE 20200700293 U, describing a blocking device comprising a pair of blocking arms, cooperating as pliers, each one provided with a jaw on its free end, at least a cylinder-piston unit, pivoted on the upper arm and a bouble lever pivoted on central pin at free end of said cylinder-piston unit and comprised of a bigger lever pivoted on lower arm in its free end and of a smaller lever pivoted on said upper arm on its free end. Both known solutions are cumbersome requiring many pieces and have stability problems when grasping panels. The patent application DE 19502659A describes a device for blocking panels according to the preamble of claim 1.

It is well evident the needing of having a solution as the one proposed according to the present invention suggesting pliers permitting adjusting grasping force with respect to the opening angle of the same pliers when taking one or more panels.

Object of the present invention is that of realising a blocking system permitting adjusting force when taking one or more panels, overcoming limits and drawbacks of known systems.

It is therefore specific object of the present invention a device for blocking one or more panels, in particular for panel cutting machines, having the features of claim 1.

Always according to the invention, said upper jaw can be provided with a linear guide, preferably of the THK type, and said moving means is a slide (50) slidably coupled with said linear guide of said upper jaw. Still according to the invention said moving means can be a wheel coupled with said upper jaw so as to be suitable to roll on the same.

Furthermore according to the invention said moving means, said connecting rod and said second end of said actuator can be pivoted about a same fourth pivot said connecting rod having preferably said second end pivoted about said fourth pivot.

Advantageously according to the invention said first end of said connecting rod can be pivoted on a substantially intermediate point of the longitudinal extension of said lower jaw.

Always according to the invention said blocking device can comprise a containment casing having a coupling flange, in particular for coupling with a member of a machine moving said containment casing.

Preferably, according to the invention said lower jaw, said upper jaw and said containment casing can be pivoted about said first pivot.

Still according to the invention said first pivot, said second pivot and said third pivot can form a substantially rectangle triangle, and the straight line passing through said first pivot and said second pivot and the straight line passing through said third pivot and said fourth pivot are substantially parallel when said actuator takes said contracted operative position.

Furthermore according to the invention said lower jaw can be provided at one end with a first tightening tooth, said upper jaw is provided at one end with a second tightening tooth, said one or more panels being blockable between said first tightening tooth and said second tightening tooth.

The present invention will be now described for illustrative, but not limitative, purposes, according to its preferred embodiments, with particular reference to the figures of the enclosed drawings, wherein:
figure 1 shows a first embodiment of the device according to the invention in its open operative position;
figure 2 shows the first embodiment of the device according to the invention in its closed operative position;
figure 3 shows a second embodiment of the device according to the invention in its open operative position;
figure 4 shows a graph of force that device according to the invention applies on a pack of panels and height of said panel pack.

In the different figures, similar parts will be indicated by the same reference numbers.

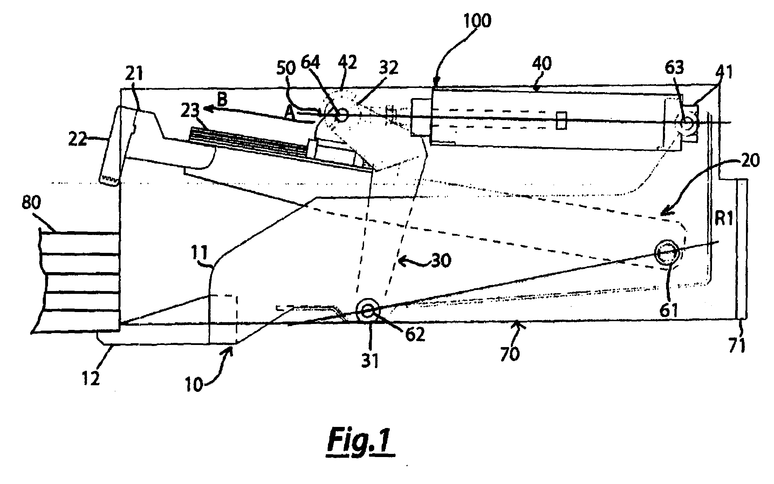

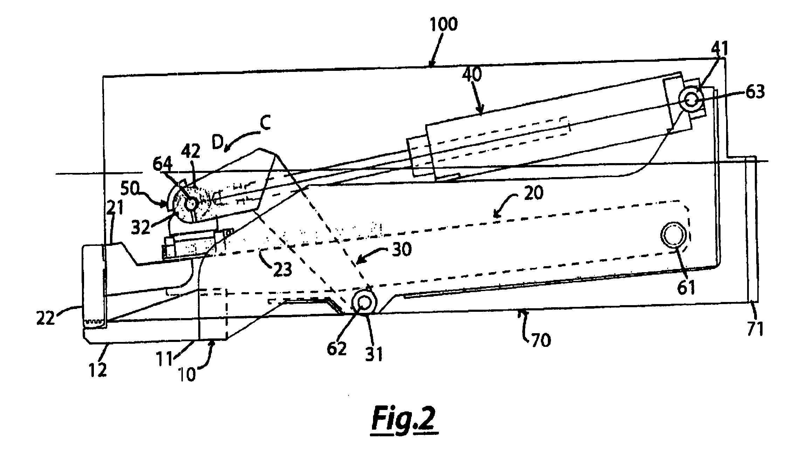

Making reference to figures 1 and 2, the device 100 according to the invention comprises a lower jaw 10, an upper jaw 20, a connecting rod 30, a pneumatic cylinder 40, a shoe 50, a containment casing 70 and a first, a second and a fourth pin, respectively indicated by refernece numbers 61, 62, 63 and 64.

Said lower jaw 10 is provided, at its end 11, a tightening tooth 12.

Said upper jaw 20 provides, at its end 21, a second tighteing tooth 22, and on its back, a linear guide 23, preferably of the THK type ("THK" stands for Toughness, High Quality).

An assembly of one or more panels 80 can be blocked between said tightening tooth 12 and said second tightening tooth 22.

Said connecting rod 30 has arms placed substantially according to an L arrangement, between which it is included an angle of abouit 100°,and it is pivoted in end 31 with said lower jaw 10, and in end 32 with said pneumatic cylinder 40, in its end 42 and with said shoe 50, by said fourth pin 64.

Said pneumatic cylinder 40 can take an operative position and an extended position. It is pivoted at its end 41 to said lower jaw 10 and to said containment casing 70 by said third pin 63.

Shoe 50 is sliding coupled with said linear guide 23, so as to slide along said upper jaw 20.

Said contaiment case 70 is provided with a flange 71, to permit its coupling, e.g., to a pushing member of a cutting machine. Said containment case 70 is, on one side, pivoted to said lower jaw 10 and to said upper jaw 20 by said first pin 61.

As it can be observed, said shoe 50, sliding along said linear guide 23 from position A to position B, transmits linear movement of said pneumatic cylinder 40 to said connecting rod 30. The latter makes a rotatory movement from position C to position D, making said upper jaw rotating along the same direction.

When said pneutmatic cylinder 40 takes the contracted operative position, lower jaw 10 and upper jaw 20 spread, while when said actuator 40 takes the extended operative position, lower jaw 10 and upper jaw 20 approach each other.

The specific embodiment of said connecting rod 30, with two arms angled each other of about 100°, involves positioning of upper arm of said connecting rod 30 in a position substantially parallel to said pneumatic cylinder 40, when the latteris in an atleast partially extended operative position. This permits increasing resistance of said device 100 when opening.

Further, position of said pins is preferably such that said first pin 61, said second pin 62 and said third pin 63 make a substantially rectangular triangle, and straight line R1 pasing between said first pin 61 and said second pin 62, and straight line R2 passing through said third pin 64 and said fourth pin 64 are substantially parallel each other when said actuator 40 takes said contracted operative position.

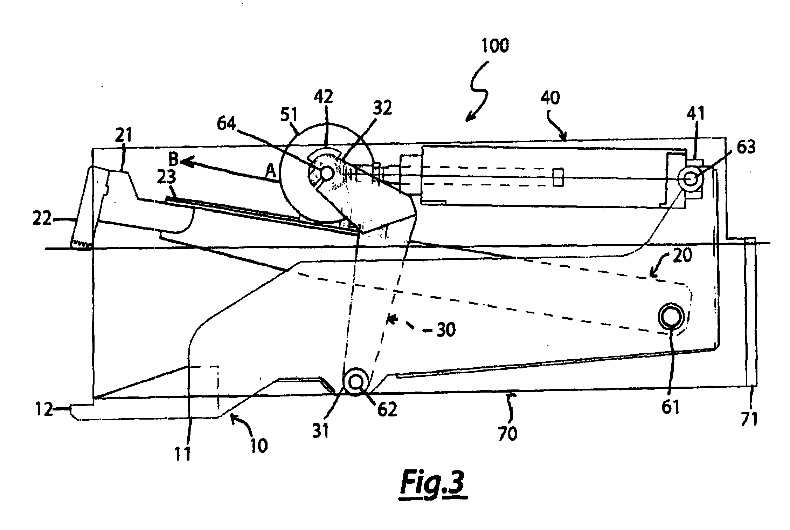

Making now reference to figure 3, it is observed a second embodiment of blocking device 100, wherein shoe 50 is replaced by a roller 51, coupled with said upper jaw 20, so as to be able rolling on the same.

Obviously, operation of blocking device 100 according to the invention is completely similar to operation of the one shown in figures 1 and 2.

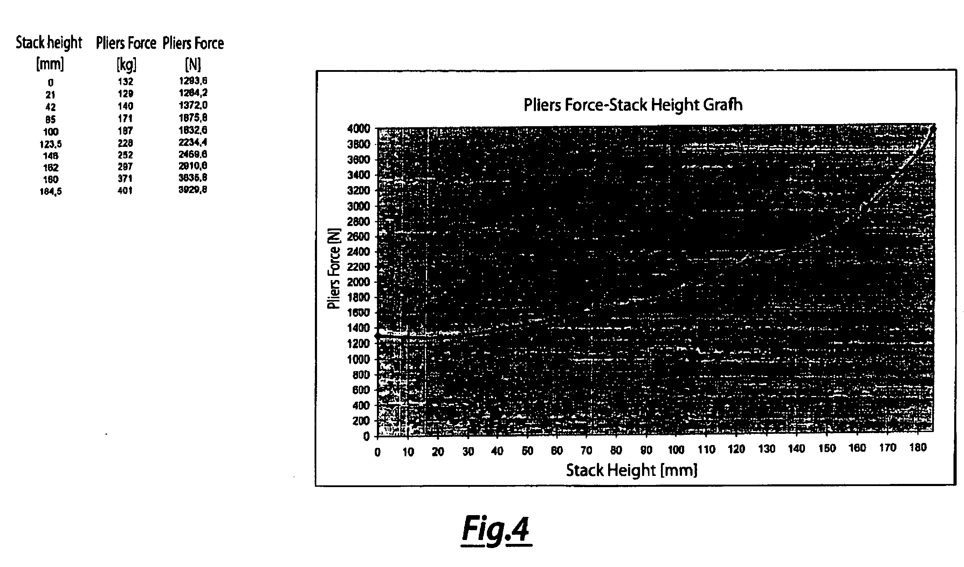

Making now reference to figures 4, it is possible observing test data obtained from use tests for device 100 according to the invention. Along abscissae there are different heights of said one or more panel stack 80, while along ordinate it is indicated, by Newton, force exerted by said device 100 on said panels in correspondence of said heights. It is clearly observed that with increase of height of panel stack 80 increases also force exerted on panels 80.

Present invention has been described for illustrative, but not limitative, purposes according to its preferred embodiments, but it is well evident that variations and/or modifications can be introduced by those skilled in the art without departing from the relevant scope, as defined in the enclosed claims.

## Claims

1. Device (100) for blocking one or more panels (80), in particular for panel cutting machines, comprising
a lower jaw (10);
an upper jaw (20), pivoted to said lower jaw (10) by a first pivot (61), said one or more panels being blockable between said lower jaw (10) and said upper jaw (20);
at least one connecting rod (30), having a first end (31) and a second end (32), said first end (31) being pivoted on said lower jaw (10) by a second pivot (62); and
an actuator (40), preferably a pneumatic cylinder, having a first end (41) and a second end (42), said first end (41) of said actuator (40) being pivoted to a third pivot (63) on said lower jaw (10), said actuator (40) being capable of assuming a contracted operative position and an extended operative position, said actuator (40) being coupled with said connecting rod (30) to said second end (42), so that when said actuator (40) takes said contracted operative position, said lower jaw (10) and said upper jaw (20) move apart, while when said actuator (40) takes said extended operative position, said lower jaw (10) and said upper jaw (20) close each other,
**characterized in that**
said upper jaw (20) provides a linear guide (23) on its back,
said device (100) further comprises moving means (50, 51) coupled with said linear guide (23), said moving means (50, 51), said second end (32) of said connecting rod (30) and said second end (42) of said actuator (40) being pivoted about a same fourth pivot (64), and said moving means (50, 51) being arranged in such way that said fourth pivot (64) is movable with respect said upper jaw (20) along a linear trajectory parallel to said linear guide (23).

2. Blocking device (100) according to claim 1, **characterized in that** said moving means is a slide (50) slidably coupled with said linear guide (23) of said upper jaw (20).

3. Blocking device (100) according to claim 1, **characterized in that** said moving means is a wheel (51) coupled with said upper jaw (20) so as to be suitable to roll on the same.

4. Blocking device (100) according to anyone of the preceding claims, **characterized in that** said moving means (50), said connecting rod (30) and said second end (42) of said actuator (40) are pivoted about a same fourth pivot (64) said connecting rod (30) having preferably said second end (32) pivoted about said fourth pivot (64).

5. Blocking device (100) according to anyone of the preceding claims, **characterized in that** said first end (31) of said connecting rod (30) is pivoted on a substantially intermediate point of the longitudinal extension of said lower jaw (10).

6. Blocking device (100) according to anyone of the preceding claims, **characterized in that** it comprises a containment casing (70) having a coupling flange (71), in particular for coupling with a member of a machine moving said containment casing.

7. Blocking device (100) according to claim 6, **characterized in that** said lower jaw (10), said upper jaw (20) and said containment casing (70) are pivoted about said first pivot (61).

8. Blocking device (100) according to anyone of the preceding claims, **characterized in that** said first pivot (61), said second pivot (62) and said third pivot (63) form a substantially rectangle triangle, and the straight line (R1) passing through said first pivot (61) and said second pivot (62) and the straight line (R2) passing through said third pivot (63) and said fourth pivot (64) are substantially parallel when said actuator (40) takes said contracted operative position.

9. Blocking device (100) according to anyone of the preceding claims, **characterized in that** said lower jaw (10) is provided at one end (11) with a first tightening tooth (12), said upper jaw (20) is provided at one end (21) with a second tightening tooth (22), said one or more panels (80) being blockable between said first tightening tooth (12) and said second tightening tooth (22).

10. Blocking device (100) according to anyone of the preceding claims, **characterized in that** said linear guide (23) is of the THK type.

## Patentansprüche

1. Vorrichtung (100) zum Sperren von einer oder mehreren Platten (80), insbesondere für Platten-Schneidemaschinen, umfassend
eine untere Klemmbacke (10);
eine obere Klemmbacke (20), die zu der unteren Klemmbacke (10) durch ein erstes Gelenk (61) drehbar gelagert ist, wobei eine oder mehrere Platten zwischen der unteren Klemmbacke (10) und der oberen Klemmbacke (20) blockierbar sind;
mindestens ein Verbindungsstab (30), der ein erstes Ende (31) und ein zweites Ende (32) aufweist, wobei das erste Ende (31) auf der unteren Klemmbacke (10) durch ein zweites Gelenk (62) drehbar gelagert ist; und
ein Aktuator (40), vorzugsweise ein pneumatischer Zylinder, aufweisend ein erstes Ende (41) und zweites Ende (42), wobei das erste Ende (41) des Aktuators (40) zu einem dritten Gelenk (63) auf der unteren Klemmbacke (10) drehbar gelagert ist, der Aktuator (40) in der Lage ist, eine zusammengezogene Betriebsposition und eine ausgedehnte Betriebsposition einzunehmen, der Aktuator (40) mit dem Verbindungsstab (30) zum dem zweiten Ende (42) gekoppelt ist, so dass, wenn der Aktuator (40) die zusammengesetzte Betriebsposition einnimmt, die untere Klemmbacke (10) und die obere Klemmbacke (20) sich auseinander bewegen, während, wenn der Aktuator (40) die ausgedehnte Betriebsposition einnimmt, die untere Klemmbacke (10) und die obere Klemmbacke (20) sich einander nähern,
**dadurch gekennzeichnet, dass**
die obere Klemmbacke (20) auf ihrer Rückseite eine lineare Führung (23) bereitstellt, die Vorrichtung (100) ferner Bewegungsmittel (50, 51) umfasst, welche mit der linearen Führung (23) gekoppelt sind, wobei die Bewegungsmittel (50, 51), das zweite Ende (32) des Verbindungsstabs (30) und das zweite Ende (42) des Aktuators (40) um ein selbes viertes Gelenk (64) drehbar gelagert sind, und die Bewegungsmittel (50, 51) derart angeordnet sind, dass das vierte Gelenk (64) in Bezug auf die obere Klemmbacke (20) entlang einer linearen Trajektorie parallel zu der linearen Führung (23) beweglich ist.

2. Sperrvorrichtung (100) gemäß Anspruch 1, **dadurch gekennzeichnet, dass** das Bewegungsmittel ein Gleiter (50) ist, der gleitfähig mit der linearen Führung (23) der oberen Klemmbacke (20) gekoppelt ist.

3. Sperrvorrichtung (100) gemäß Anspruch 1, **dadurch gekennzeichnet, dass** das Bewegungsmittel ein Rad (51) ist, das mit der oberen Klemmbacke (20) gekoppelt ist, um geeignet zu sein, auf dieser zu rollen.

4. Sperrvorrichtung (100) gemäß einem der vorhergehenden Ansprüche, **dadurch gekennzeichnet, dass** das Bewegungsmittel (50), der Verbindungsstab (30) und das zweite Ende (42) des Aktuators (40) um ein selbes viertes Gelenk (64) drehbar gelagert sind, wobei der Verbindungsstab (30) vorzugsweise das zweite Ende (32) um das vierte Gelenk (64) drehend aufweist.

5. Sperrvorrichtung (100) gemäß einem der vorhergehenden Ansprüche, **dadurch gekennzeichnet, dass** das erste Ende (31) des Verbindungsstabs (30) auf einen im Wesentlichen zwischengelagerten Punkt auf der longitudinalen Erstreckung der unteren Klemmbacke (10) schwenkbar ist.

6. Sperrvorrichtung (100) gemäß einem der vorhergehenden Ansprüche, **dadurch gekennzeichnet, dass** sie ein Eingrenzungsgehäuse (70) umfasst, das ein Kopplungsflansch (71) aufweist, insbesondere zur Kopplung mit einem Element einer Maschine, welche das Eingrenzungsgehäuse bewegt.

7. Sperrvorrichtung (100) gemäß Anspruch 6, **dadurch gekennzeichnet, dass** die untere Klemmbacke (10), die obere Klemmbacke (20) und das Eingrenzungsgehäuse (70) um das erste Gelenk (61) schwenkbar sind.

8. Sperrvorrichtung (100) gemäß einem der vorhergehenden Ansprüche, **dadurch gekennzeichnet, dass** das erste Gelenk (61), das zweite Gelenk (62) und das dritte Gelenk (63) ein im Wesentlichen rechtwinkliges Dreieck bilden und die gerade Linie (R1), die durch das erste Gelenk (61) und das zweite Gelenk (62) hindurchtritt und die gerade Linie (R2), die durch das dritte Gelenk (63) und das vierte Gelenk (64) hindurchtritt, im Wesentlichen parallel sind, wenn der Aktuator (40) die zusammengezogene Betriebsposition einnimmt.

9. Sperrvorrichtung (100) gemäß einem der vorhergehenden Ansprüche, **dadurch gekennzeichnet, dass** die untere Klemmbacke (10) an einem Ende (11) mit einem ersten Spannzahn (12) versehen ist, die obere Klemmbacke (20) an einem ersten Ende (21) mit einem zweien Spannzahn (22) versehen ist, wobei die eine oder mehreren Platten (80) zwischen dem ersten Spannzahn (12) und dem zweiten Spannzahn (22) blockierbar sind.

10. Sperrvorrichtung (100) gemäß einem der vorhergehenden Ansprüche, **dadurch gekennzeichnet, dass** die lineare Führung (23) vom THK-Typ ist.

## Revendications

1. Dispositif (100) de blocage d'un ou plusieurs panneaux (80), en particulier pour des machines à découper des panneaux, comprenant
une mâchoire inférieure (10);
une mâchoire supérieure (20), articulée sur ladite mâchoire inférieure (10) par un premier pivot (61), lesdits un ou plusieurs panneaux pouvant être bloqués entre ladite mâchoire inférieure (10) et ladite mâchoire supérieure (20);
au moins une tige de liaison (30), ayant une première extrémité (31) et une seconde extrémité (32), ladite première extrémité (31) étant articulée sur ladite mâchoire inférieure (10) par un second pivot (62); et
un actionneur (40), de préférence un vérin pneumatique, ayant une première extrémité (41) et une seconde extrémité (42), ladite première extrémité (41) dudit actionneur (40) étant articulée autour d'un troisième pivot (63) sur ladite mâchoire inférieure (10), ledit actionneur (40) étant apte à prendre une position opérationnelle contractée et une position opérationnelle déployée, ledit actionneur (40) étant couplé au moyen de ladite tige de liaison (30) à ladite seconde extrémité (42) de sorte que, lorsque ledit actionneur (40) prend ladite position opérationnelle contractée, ladite mâchoire inférieure (10) et ladite mâchoire supérieure (20) s'éloignent l'une de l'autre, tandis que, lorsque ledit actionneur (40) prend ladite position opérationnelle déployée, ladite mâchoire inférieure (10) et ladite mâchoire supérieure (20) se ferment mutuellement,
**caractérisé en ce que**
ladite mâchoire supérieure (20) présente un guide linéaire (23) sur sa face arrière,
ledit dispositif (100) comprenant, en outre, un moyen de déplacement (50, 51) couplé audit guide linéaire (23), ledit moyen de déplacement (50, 51), ladite seconde extrémité (32) de ladite tige de liaison (30) et ladite seconde extrémité (42) dudit actionneur (40) étant articulés autour d'un même quatrième pivot (64), et ledit moyen de déplacement (50, 51) étant disposé de manière telle que ledit quatrième pivot (64) est déplaçable par rapport à ladite mâchoire supérieure (20) le long d'une trajectoire linéaire parallèle audit guide linéaire (23).

2. Dispositif de blocage (100) selon la revendication 1, **caractérisé en ce que** ledit moyen de déplacement est un coulisseau (50) couplé à coulissement audit guide linéaire (23) de ladite mâchoire supérieure (20).

3. Dispositif de blocage (100) selon la revendication 1, **caractérisé en ce que** ledit moyen de déplacement est une roue (51) couplée à ladite mâchoire supérieure (20) de façon à être apte à rouler sur celle-ci.

4. Dispositif de blocage (100) selon l'une quelconque des revendications précédentes, **caractérisé en ce que** ledit moyen de déplacement (50), ladite tige de liaison (30) et ladite seconde extrémité (42) dudit actionneur (40) sont articulés autour d'un même quatrième pivot (64), ladite seconde extrémité (32) de ladite tige de liaison (30) étant, de préférence, articulée autour dudit quatrième pivot (64).

5. Dispositif de blocage (100) selon l'une quelconque des revendications précédentes, **caractérisé en ce que** ladite première extrémité (31) de ladite tige de liaison (30) est articulée sur un point sensiblement intermédiaire de l'extension longitudinale de ladite mâchoire inférieure (10).

6. Dispositif de blocage (100) selon l'une quelconque des revendications précédentes, **caractérisé en ce qu'**il comprend un boîtier de rétention (70) pourvu d'une bride d'accouplement (71), en particulier pour coupler un élément d'une machine déplaçant ledit boîtier de rétention.

7. Dispositif de blocage (100) selon la revendication 6, **caractérisé en ce que** ladite mâchoire inférieure (10), ladite mâchoire supérieure (20) et ledit boîtier de rétention (70) sont articulés autour dudit premier pivot (61).

8. Dispositif de blocage (100) selon l'une quelconque des revendications précédentes, **caractérisé en ce que** ledit premier pivot (61), ledit second pivot (62) et ledit troisième pivot (63) forment un triangle sensiblement rectangle, et la ligne droite (R1) passant par ledit premier pivot (61) et ledit second pivot (62) et la ligne droite (R2) passant par ledit troisième pivot (63) et ledit quatrième pivot (64) sont sensiblement parallèles lorsque ledit actionneur (40) prend ladite position opérationnelle contractée.

9. Dispositif de blocage (100) selon l'une quelconque des revendications précédentes, **caractérisé en ce que** ladite mâchoire inférieure (10) est pourvue, à une extrémité (11), d'une première dent de serrage (12), ladite mâchoire supérieure (20) est pourvue, à une extrémité (21), d'une seconde dent de serrage (22), le(s)dit(s) un ou plusieurs panneaux (80) pouvant être bloqués entre ladite première dent de serrage (12) et ladite seconde dent de serrage (22).

10. Dispositif de blocage (100) selon l'une quelconque des revendications précédentes, **caractérisé en ce que** ledit guide linéaire (23) est du type THK.
